# EUROPÄISCHE PATENTSCHRIFT

(11) **EP 0 714 188 B1**
(45) Veröffentlichungstag und Bekanntmachung des Hinweises auf die Patenterteilung: **02.01.2003**
(21) Anmeldenummer: 94118596.9
(22) Anmeldetag: 25.11.1994
(51) Int. Cl.: H04L 1/20

(54) **Verfahren zur Ermittlung einer die Qualität einer digitalen Sprachübertragung kennzeichnenden Grösse**
Method for determining a caracteristic quality parameter of a digital speech transmission
Procédé de détermination d'une grandeur caractéristique de la qualité d'une transmission de parole digitale

(43) Veröffentlichungstag der Anmeldung: 29.05.1996
(73) Patentinhaber: T-Mobile Deutschland GmbH, 53227 Bonn (DE)
(72) Erfinder: Gaspard, Ingo Dipl. Ing., D-53225 Bonn (DE); Smolka, Peter, 53225 Bonn (DE)
(74) Vertreter: Riebling, Peter, Dr.-Ing.

(56) Entgegenhaltungen:
- EP-A- 0 644 674
- DE-A- 3 441 644
- US-A- 4 882 758
- US-A- 5 323 421
- 40TH IEEE VEHICULAR TECHNOLOGY CONFERENCE, Mai 1990, ORLONDO,US; Seiten 264 - 269, XP203819 W.MENDE 'Evaluation of a Proposed Handover Algorithm for the GSM Cellular System.'
- ZAHORIAN S.A., JAGHARGHI A.J.: 'Minimum Mean-Square Error Transformations of Categorical Data to Target Positions' IEEE TRANSACTIONS ON SIGNAL PROCESSING, NEW YORK, Bd. 40, Nr. 1, 1992, Seiten 13 - 23, XP000270169

## Beschreibung

Die Erfindung betrifft ein Verfahren zur Ermittlung einer die Qualität einer digitalen Sprachübertragung kennzeichnenden Größe.

Insbesondere in digitalen Mobilfunknetzen ist eine meßtechnische Erfassung der Qualität der Übertragung von Sprache wichtig. Dieses ist bei der Auslegung und Erweiterung von Netzen erforderlich und kann auch zur Umschaltung der Funkverbindung zwischen einer Mobilstation und einer Basisstation auf eine andere Basisstation ausgenutzt werden.

Es ist bekannt, die Bitfehlerrate bei der Planung, bei der Bewertung und im Betrieb von Mobilfunknetzen als Fehler- bzw. Qualitätsmaß zu verwenden. Ein solches Verfahren zur Überwachung von analogen und digitalen Nachrichtenübertragungseinrichtungen ist aus der DE 34 41 644 bekannt. Dabei werden die Werte beispielsweise in Tagesabständen über einen Zeitraum von einem Vierteljahr automatisch erfaßt und gespeichert. Durch die wiederholte Auswertung der gespeicherten Werte kann ein Absinken der Qualität ermittelt werden.

Die Bitfehlerrate beinhaltet jedoch keine zuverlässige Aussage über die Sprachqualität. Dabei ist die Verständlichkeit ein wichtiger Parameter es gehören dazu auch unter anderem Klarheit, Natürlichkeit. Sprechererkennbarkeit, Unterscheidbarkeit zwischen männlichem und weiblichem Sprecher, das Erkennen des ungefähren Alters des Sprechers und der Wahmehmungsaufwand, den der Zuhörer einsetzen muß, um den Inhalt zu verstehen.

An sich bekannte subjektive Sprachtests beinhalten die Bewertung von kurzen Sprachproben durch eine große Anzahl von Testpersonen gemäß einem Raster von fünf subjektiven Qualitätsstufen. Diese Testverfahren sind zwar unentbehrlich für die Festlegung von wesentlichen Eigenschaften von Mobilfunknetzen, insbesondere für die Festlegung der angewandten Codes, sind jedoch für eine häufig vorzunehmende Qualitätsbeurteilung während der Planung, während der Bewertung und während des Betriebes viel zu aufwendig.

Die US-A-5 323 421 offenbart ein Verfahren und eine Vorrichtung zur Abschätzung der Kanalqualität in einem Empfänger eines digitalen Kommunikationssystems. Hierzu wird in mehreren Subintervallen des digitalen Signalstroms die Größe des Phasenfehlers ermittelt und zu einer Fehlergröße zusammengefasst. Diese Fehlergröße wird mittels einer Übertragungsfunktion in eine entsprechende Bitfehlerrate (BER) überführt, wobei sich durch Mittelung der einzelnen Bitfehlerraten der Subintervalle die Bitfehlerrate des gesamten Beobachtungsintervalls abschätzen lässt. Diese gemittelte Bitfehlerrate wird schließlich mit einem vorgegebenen Schwellwert verglichen, so daß die Kanalqualität im Beobachtungsintervall abgeschätzt werden kann. Dieses Verfahren verwendet ausschließlich die Bitfehlerrate als Qualitätsmerkmal. Eine dem subjektiven Empfinden von Testpersonen vergleichbare Ermittlung der Sprachqualität lässt sich mit dem bekannten Verfahren nicht erreichen.

Die nachveröffentlichte EP-A-0 644 674 mit älterem Zeitrang lehrt ein Verfahren zur Ermittlung einer die Qualität einer digitalen Sprachübertragung kennzeichnenden Größe, bei dem ein Prüfsignal, bestehend aus einer Sequenz menschlicher Sprache, zwischen einem Sender und Empfänger übertragen wird. Das Prüfsignal wird beim Empfänger in eine Vielzahl von Teilsequenzen und eine Vielzahl von Amplitudenwerten zerlegt. Die Amplitudenwerte der Teilsequenzen werden jeweils verschiedenen, die Qualität beschreibenden Klassen zugeordnet, wobei ein neuronales Netz aus dieser Klassifizierung einen Wertungswert zur Beurteilung der Übertragungsqualität bestimmt. Das neuronale Netz wird dadurch trainiert, dass ihm wiederholt empfangsseitige Prüfsequenzen verschiedener Übertragungsqualität eingegeben werden, die zuvor von menschlichen Testpersonen subjektiv beurteilt wurden. Eine Beurteilung der Übertragungsqualität basierend auf einer Ermittlung der Bitfehlerraten ist aus dieser Schrift nicht bekannt.

Aufgabe des vorliegenden Verfahrens ist es, eine die subjektive Qualität einer digitalen Sprachübertragung kennzeichnenden Größe auf technischem Wege zu ermitteln.

Diese Aufgabe wird erfindungsgemäß durch die Merkmale des Patentanspruchs 1 gelöst.

Die Erfindung zeichnet sich dadurch aus, daß in gleichbleibenden Zeitabständen eine Bitfehlerrate ermittelt wird, die ermittelten Bitfehlerraten für einen vorgegebenen Zeitabschnitt gespeichert werden, und die gespeicherten Biffehlerraten unter Verwendung einer Transformationsvorschrift in die die Qualität kennzeichnende Größe umgewandelt werden, wobei die Transformationsvorschrift zur Umwandlung der Bitfehlerrate in eine die Qualität kennzeichnende Größe zuvor dadurch ermittelt wurde, daß eine von Testpersonen beurteilte subjektive Qualität für verschiedene Verläufe der Bitfehlerrate von Sprachproben innerhalb vorgegebener Zeitabschnitte erfaßt wurde und anschließend die Verläufe der Bitfehlerrate der Sprachproben und die jeweils von den Testpersonen ermittelte subjektive Qualität einer mehrdimensionalen Regressionsanalyse unterzogen wurden.

Vorzugsweise ist dabei vorgesehen, daß die Berechnung der die Qualität kennzeichnenden Größe nach der Gleichung c = T v + o erfolgt, wobei c die die Qualität kennzeichnende Größe, v ein Vektor, dessen Komponenten die gespeicherten Bitfehlerraten oder hieraus abgeleitete Größen sind, T eine Transformationsmatrix und o ein Offsetvektor ist

Diese an sich aus IEEE Transactions on Signal Processing, Volume 40, No. 1, January 1992, Seiten 13 bis 17 bekannte lineare Transformationsvorschrift hat sich als rechentechnisch besonders günstig herausgestellt. Es ist jedoch im Rahmen des erfindungsgemäßen Verfahrens auch möglich, nichtlineare Transformationsvorschriften anzuwenden - beispielsweise mit Hilfe von neuronalen Netzen oder zur Lösung des Optimierungsproblems: "Finde optimale Transformationsvorschrift, die Vektoren v auf Vektoren c abbildet, wobei der Gesamtfehler minimal ist".

Im übrigen wird in vielen Fällen die oben als Vektor c bezeichnete Größe lediglich eine skalare Größe sein, nämlich eine Reihe von Qualitätsstufen. Es ist jedoch im Rahmen der Erfindung auch möglich, ein mehrdimensionales Qualitätsmaß zu erhalten - beispielsweise mit eingangs erwähnten Parametern der Sprachqualität.

Eine innerhalb einer vorteilhaften Ausführungsform des erfindungsgemäßen Verfahrens anwendbare mehrdimensionale Regressionsanalyse besteht darin, daß aus denjenigen Vektoren, welche aus einer Menge von Vektoren v zu jeweils einem durch Versuche ermittelten die Qualität kennzeichnenden Vektor c führen, durch Minimierung der Summe der Fehlerquadrate eine Transformation (bestehend aus Matrix- und Offsetvektor) erzeugt wird.

Vorzugsweise ist bei dem erfindungsgemäßen Verfahren vorgesehen, daß jeweils in Zeitabständen von 480ms die Bitfehlerrate gemessen wird und daß der größere Zeitabschnitt 40s ist.

Bei einem Mobilfunknetz nach dem GSM-Standard ist es vorteilhaft, daß als Maß für die Bitfehlerrate der nach dem GSM-Protokoll übertragene Wert RXQUAL verwendet wird.

Ferner hat es sich als günstig herausgestellt, wenn die Verläufe der Bitfehlerrate vor der mehrdimensionalen Regressionsanalyse vorverarbeitet werden, wobei statistisch relevante Größen gebildet werden. Vorzugsweise sind die statistisch relevanten Größen mindestens der Mittelwert und die Standardabweichung. Außerdem können Größen wie die Wahrscheinlichkeitsdichtefunktion oder statistische Bindungen berechnet werden.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer Einrichtung zur Ermittlung der Transformationsmatrix und des Offsetvektors,
- Fig. 2: ein Ablaufdiagramm zur Beurteilung der gestörten Sprachproben durch Testhörer und die Ermittlung der Transformationsmatrix und des Offsetvektors,
- Fig. 3: ein Blockschaltbild einer Meßeinrichtung und
- Fig. 4: ein Ablaufdiagramm zur Bestimmung der Sprachqualität als Funktion des jeweiligen geografischen Ortes.

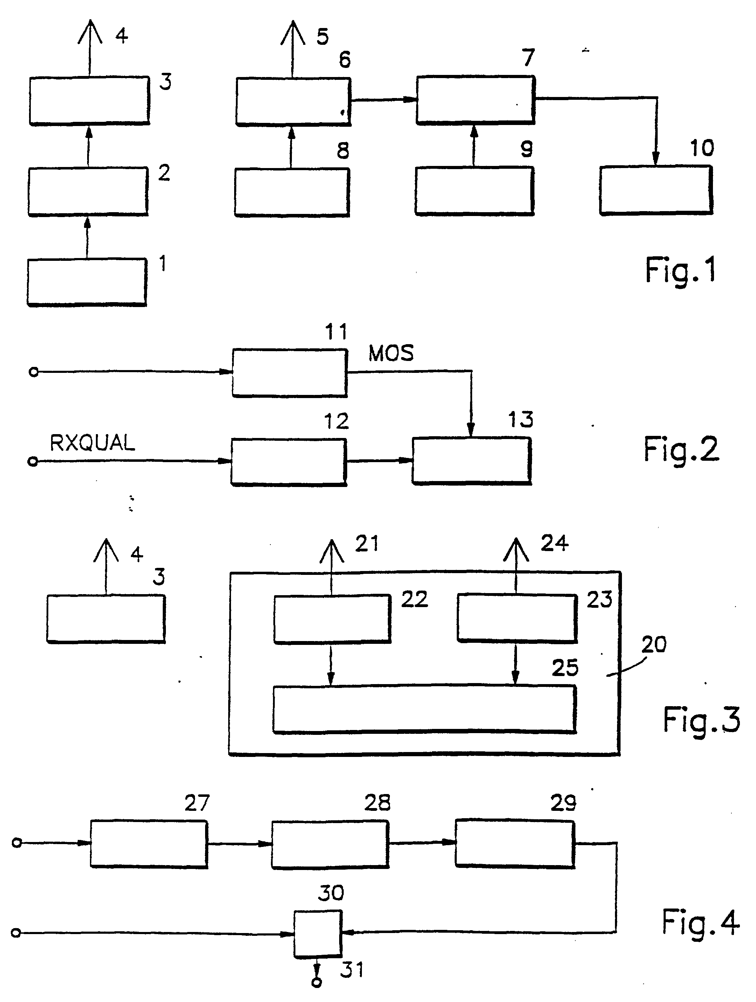

Bei der in Fig. 1 dargestellten Einrichtung werden auf Magnetband gespeicherte Sprachproben von einem digitalen Audiorekorder über ein Festnetztelefon 2, über das Wirknetz eines Mobilfunknetzes einschließlich einer Basisstation 3 und über eine Antenne 4 ausgestrahlt. Die ausgestrahlten Signale werden von einer Empfangsantenne 5 empfangen und über einen Fadingsimulator 6 einer Mobilstation 7 zugeleitet. Mit Hilfe eines Personalcomputers 8 wird der Fadingsimulator so gesteuert, daß innerhalb einer Spachprobenlänge von beispielsweise 40s ein vorgegebener ständig wechselnder Verlauf des Fadings (Fadingprofil) entsteht

Die Mobilstation 7 ist femer mit einem weiteren Personalcomputer 9 verbunden, der den in der Mobilstation 7 alle 480ms gebildeten Wert RXQUAL für die Bitfehlerrate aufzeichnet. Mit Hilfe eines weiteren digitalen Audiorekorders 10 werden die empfangenen und je nach Empfangsverhältnissen und Einstellung des Fadingsimulators gestörten Sprachproben aufgezeichnet

Wie aus dem Ablaufdiagramm nach Fig. 2 ersichtlich, werden die vom digitalen Audiorekorder 10 (Fig. 1) wiedergegebenen "gestörten" Sprachproben bei 11 einer Gruppe von Testhörem präsentiert. Die Beurteilung erfolgt durch eine große Zahl von Testpersonen in einem Raster von 5 subjektiven Qualitätsstufen von "sehr gut" bis "schlecht". Die Ergebnisse werden für alle Testpersonen gemittelt und führen zu mittleren Beurteilungsnoten, wofür in der Literatur die Bezeichnung mean opinion score (MOS) benutzt wird. Es sind jedoch im Rahmen der Erfindung auch andere Beurteilungsverfahren möglich. In der Regel werden als Testhörer Personen einer Benutzergruppe, beispielsweise Geschäftsleute, in Frage kommen. Außer der eindimensionalen Reihe von Qualitätsstufen kommen auch mehrdimensionale Beurteilungen in Frage, beispielsweise die obengenannten Qualitätsstufen für mehrere verschieden zusammengesetzte Gruppen von Testhörem.

Die vom Personalcomputer 9 (Fig. 1) wiedergegebene Bitfehlerrate RXQUAL wird als Zeitfunktion einer Vorverarbeitung 12 unterzogen, wobei aus einem Fehlerratenprofil, das heißt der Zeitfunktion der Fehlerrate während jeweils eines Beurteilungszeitraumes von 40s, der Vektor v gebildet wird. Hierzu können beispielsweise der Mittelwert der Fehlerraten, die Standardabweichung, die Wahrscheinlichkeitsdichtefunktion, statistische Bindungen und gegebenenfalls weitere Größen abgeleitet werden.

Diese Größen werden als Vektoren v zusammen mit den MOS-Beurteilungen der Testhörer 11 einer Fehlerquadratminimierung 13 unterzogen, an deren Ausgang die Matrix T und der Offsetvektor o anstehen.

Fig. 3 zeigt ein Blockschaltbild einer Meßeinrichtung zur Durchführung des erfindungsgemäßen Verfahrens, die in einem schematisch angedeuteten Meßfahrzeug 20 installiert ist. Mit Hilfe einer Mobilstation 22 und einer Antenne 21 werden die von einer Basisstation 3 und deren Antenne 4 ausgestrahlten Signale empfangen. In an sich bekannter Weise bildet die Mobilstation 22 den Wert RXQUAL für die jeweils vorliegende Bitfehlerrate. Die Meßeinrichtung enthält femer einen GPS-Empfänger (GPS = global positioning system) 23 mit einer Antenne 24. Diese empfängt die von Navigationssatelliten ausgestrahlten Signale und bildet daraus eine Ortsinformation, die zusammen mit den Werten RXQUAL einem Personalcomputer 25 zugeführt wird. Dieser zeichnet die Werte RXQUAL und die zugehörige Ortsinformation auf und berechnet daraus die Sprachqualität als Ortsfunktion und zeichnet diese für Zwecke einer späteren Auswertung auf.

Fig. 4 stellt die wesentlichen Verarbeitungsschritte zur Ermittlung der Sprachqualität in Form eines Ablaufdiagramms dar. Bei 27 erfolgt eine zeitliche Fensterung der Zeitfunktion RXQUAL, wobei vorzugsweise in ein Fenster, welches der Sprachprobenlänge von 40s entspricht, 83 RXQUAL-Werte aufgenommen werden. Diese Werte werden bei 28 einer bereits im Zusammenhang mit Fig. 2, Schritt 12 erläuterten Vorverarbeitung zur Bildung des Vektors v unterzogen. Bei 29 erfolgt eine Transformation mit Hilfe der gemäß Fig. 2 gebildeten Transformationsmatrix T und des Offsetvektors o. Das Ergebnis ist die Sprachqualität als Zeitfunktion, die bei 30 mit der Ortsinformation zusammengeführt wird, so daß an einem Ausgang 31 die Sprachqualität als Ortsfunktion zur Verfügung steht.

## Patentansprüche

1. Verfahren zur Ermittlung einer die Qualität einer digitalen Sprachübertragung kennzeichnenden Größe, bei dem in gleichbleibenden Zeitabständen eine Bitfehlerrate ermittelt wird (28), die ermittelten Bitfehlerraten für einen vorgegebenen Zeitabschnitt gespeichert werden, und die gespeicherten Bitfehlerraten unter Verwendung einer Transformationsvorschrift in die die Qualität kennzeichnende Größe umgewandelt werden (29),
wobei die Transformationsvorschrift zuvor dadurch ermittelt wurde (13), daß eine von Testpersonen beurteilte subjektive Qualität für verschiedene Verläufe der Bitfehlerrate von Sprachproben innerhalb vorgegebener Zeitabschnitte erfaßt wurde (11), und anschließend die Verläufe der Bitfehlerrate der Sprachproben (12) und die jeweils von den Testpersonen ermittelte subjektive Qualität (11) einer mehrdimensionalen Regressionsanalyse (13) unterzogen wurden.

2. Verfahren nach Anspruch 1, **dadurch gekennzeichnet, daß** die Berechnung der die Qualität kennzeichnenden Größe (29) nach der Gleichung c = T v + o erfolgt,
wobei c die die Qualität kennzeichnende Größe, v ein Vektor, dessen Komponenten die gespeicherten Bitfehlerraten oder hieraus abgeleitete Größen wie der Mittelwert der Fehlerraten, die Standardabweichung, oder die Wahrscheinlichkeitsdichtefunktion sind, T eine Transformationsmatrix und o ein Offsetvektor ist.

3. Verfahren nach Anspruch 2, **dadurch gekennzeichnet, daß** die mehrdimensionale Regressionsanalyse dadurch erfolgt, daß aus denjenigen Vektoren, welche aus einer Menge von Vektoren v zu jeweils einem durch Versuche ermittelten die Qualität kennzeichnenden Vektor c führen, durch Minimierung der Summe der Fehlerquadrate eine Transformationsvorschrift bestehend aus Transformationsmatrix und Offsetvektor, erzeugt wird.

4. Verfahren nach einem der vorhergehenden Ansprüche, **dadurch gekennzeichnet, daß** die Bitfehlerrate jeweils in Zeitabständen von 480ms gemessen wird.

5. Verfahren nach einem der vorhergehenden Ansprüche, **dadurch gekennzeichnet, daß** die Dauer des vorgegebenen Zeitabschnitts 40s beträgt.

6. Verfahren nach einem der Ansprüche 1 bis 3, **dadurch gekennzeichnet, daß** als Maß für die Bitfehlerrate der nach dem GSM-Protokoll übertragene Wert RXQUAL verwendet wird.

7. Verfahren nach einem der vorhergehenden Ansprüche, **dadurch gekennzeichnet, daß** sowohl die Verläufe der Bitfehlerrate vor der mehrdimensionalen Regressionsanalyse, als auch die Verläufe der Bitfehlerrate vor der Transformation in die Qualitätsbewertungsgröße der gleichen Vorverarbeitung (12, 28) unterzogen werden, wobei statistisch relevante Größen, umfassend mindestens den Mittelwert und die Standardabweichung, gebildet werden.

## Claims

1. Method for the determination of a quantity characterising the quality of a digital speech transmission, in which a bit error rate is determined at constant intervals of time (28), the bit error rates determined are stored for a preset length of time, and the stored bit error rates are converted to the quantity characterising the quality, using a transformation rule (29), wherein the transformation rule was previously determined (13) by the fact that a subjective quality assessed by test persons for different cycles of the bit error rate of speech samples within preset lengths of time was detected (11), and then the cycles of the bit error rate of the speech samples (12) and the subjective quality (11) determined in each case by the test persons were subjected to multi-dimensional regression analysis (13).

2. Method according to claim 1, **characterised in that** calculation of the quantity characterising the quality (29) is effected according to the equation c = T v + O, where c is the quantity characterising the quality, v is a vector whose components are the stored bit error rates or quantities derived therefrom such as the mean value of the error rates, the standard deviation or the probability density function, T is a transformation matrix and o is an offset vector.

3. Method according to claim 2, **characterised in that** multi-dimensional regression analysis is effected by generating a transformation rule consisting of transformation matrix and offset vector from the vectors which from a number of vectors v in each case lead to a vector c characterising the quality and determined by tests, by minimising the sum of the error squares.

4. Method according to one of the preceding claims, **characterised in that** the bit error rate is measured at intervals of 480 ms respectively.

5. Method according to one of the preceding claims, **characterised in that** the duration of the preset length of time is 40 s.

6. Method according to one of claims 1 to 3, **characterised in that** the value RXQUAL, which is transmitted according to the GSM protocol, is used as a measure for the bit error rate.

7. Method according to one of the preceding claims, **characterised in that** both the cycles of the bit error rate before multi-dimensional regression analysis and the cycles of the bit error rate before transformation into the quality assessment quantity are subjected to the same preliminary processing (12, 28), wherein statistically relevant quantities including at least the mean value and the standard deviation are formed.

## Revendications

1. Procédé pour obtenir une grandeur qui caractérise la qualité d'une transmission vocale numérique, dans lequel un taux d'erreur de bits (28) est obtenu à des intervalles de temps constants, les taux d'erreur de bits obtenus pour un laps de temps prédéterminé sont mémorisés et les taux d'erreur de bits mémorisés sont convertis (29), avec utilisation d'une prescription de transformation, en la grandeur qui caractérise la qualité,
la prescription de transformation ayant tout d'abord été obtenue (13) par le fait qu'une qualité subjective estimée par des testeurs a été saisie pour différentes courbes du taux d'erreur de bits sur des échantillons vocaux dans des laps de temps prédéterminés (11) et, ensuite, les courbes du taux d'erreur de bits des échantillons vocaux (12) et la qualité subjective (11) obtenue par les testeurs ont été soumises à une analyse par régression multidimensionnelle (13).

2. Procédé selon la revendication 1, **caractérisé en ce que** le calcul de la grandeur (29) caractérisant la qualité s'effectue selon l'équation c = Tv + o, où c est la grandeur caractérisant la qualité, v un vecteur dont les composantes sont les taux d'erreur de bits mémorisés ou des grandeurs qui en sont dérivées, comme la valeur moyenne des taux d'erreur, l'écart standard ou la fonction de densité de probabilité, T est une matrice de transformation et o est un vecteur d'offset.

3. Procédé selon la revendication 2, **caractérisé en ce que** l'analyse par régression multidimensionnelle s'effectue par le fait qu'à partir des vecteurs qui conduisent d'une quantité de vecteurs v à chaque fois à un vecteur caractérisant la qualité, obtenu par des essais, on produit, par minimisation de la somme des carrés des erreurs, une prescription de transformation composée d'une matrice de transformation et d'un vecteur d'offset.

4. Procédé selon l'une des revendications précédentes, **caractérisé en ce que** le taux d'erreur de bits est mesuré à chaque fois à des intervalles de temps de 480 ms.

5. Procédé selon l'une des revendications précédentes, **caractérisé en ce que** la durée du laps de temps prédéterminé est de 40 s.

6. Procédé selon l'une des revendications-1 à 3, **caractérisé en ce qu'**on utilise comme mesure pour le taux d'erreur de bits la valeur RXQUAL transmise conformément au protocole GSM.

7. Procédé selon l'une des revendications précédentes, **caractérisé en ce qu'**aussi bien les courbes du taux d'erreur de bits avant l'analyse par régression multidimensionnelle que les courbes du taux d'erreur de bits avant la transformation en la valeur d'estimation de la qualité sont soumises au même prétraitement (12, 28), et on forme alors des grandeurs statistiquement pertinentes, comprenant au moins la valeur moyenne et l'écart standard.
